Europäisches Patentamt

European Patent Office

Office européen des brevets

(19)

(11) Publication number: **0 042 842**
**B1**

(12) **EUROPEAN PATENT SPECIFICATION**

(45) Date of publication of patent specification: **13.06.84**

(51) Int. Cl.³: **B 29 D 27/00, B 32 B 17/04**

(21) Application number: **80902395.5**

(22) Date of filing: **16.12.80**

(86) International application number:
**PCT/GB80/00216**

(87) International publication number:
**WO 81/01815 09.07.81 Gazette 81/16**

(54) FOAM SANDWICH CONSTRUCTION.

(30) Priority: **28.12.79 GB 7944417**

(43) Date of publication of application:
**06.01.82 Bulletin 82/1**

(45) Publication of the grant of the patent:
**13.06.84 Bulletin 84/24**

(84) Designated Contracting States:
**DE FR GB NL SE**

(56) References cited:
**CA - A - 989 287**
**FR - A - 2 060 386**
**GB - A - 926 711**
**GB - A - 1 074 525**
**US - A - 3 044 146**
**US - A - 3 860 478**

(73) Proprietor: **UNITEX LIMITED**
**Knaresborough**
**Yorkshire, HG5 OPP (GB)**

(72) Inventor: **SEDDON, Robert Maxwell**
**Unitex Limited Knaresborough**
**Yorkshire HG5 OPP (GB)**

(74) Representative: **Livsey, Gilbert Charlesworth Norris**
**et al,**
**HYDE, HEIDE & O'DONNELL 146 Buckingham**
**Palace Road**
**London SW1W 9TR (GB)**

## Description

This invention relates to a laminate or sandwich structure suitable for use as a load bearing cladding, and in particular to sandwich constructions using two external skins of a material having a relatively high modulus of elasticity between which is sandwiched a light-weight core.

In prior French specification No 2 060 386 there is described a building panel in the form of a sandwich with a core consisting of a honeycomb of steel or aluminium, with the cells being filled with foamed plastics material, and on both sides of this core and bonded thereto, a skin or coating adapted to be loaded in use. The skins are adapted to take the main structural loadings, to which the building panel is subjected when in use, and load is transmitted between the skins by the metallic honeycomb structure of the core, with the foamed plastics material occupying the cells performing little or no stress transmitting function. In order to confer resistance to compressive forces in the transverse direction of the sandwich, the skin or coating on at least one side of the core is formed under pressure. This involves pre-tensioning the fibres and adds to the cost and complexity of manufacture.

In the case of the later sandwich structure proposed in United Kingdom specification No 1 555 271, the core consists solely of a foamed plastics material and this forms the main means of stress transference between the skins bonded on both sides of the core. In this case then there is no metallic boneycomb structure and yet good stiffness/weight characteristics are achieved in panels which are very much lighter than the earlier proposal.

In both these earlier proposals the skins are conveniently formed using monofilaments, typically of glass bonded together and to adjacent layers of the sandwich by a resinous bonding agent. In the French specification the monofilaments are held in longitudinal tension while the resin sets so that the monofilaments are preloaded, which is clearly a costly and complex expedient. In the United Kingdom specification No 1 555 271, the monofilaments may be in the form of a mat of randomly arranged filaments, or a woven fabric of long sinuous filaments or such a mat may be used in combination with such a woven fabric of sinuous fibres.

In both of these prior proposals the monofilaments are fully wetted with the resinous bonding agent, in one case by dipping in a resin bath. In UK specification No 1 555 271 it is suggested that when glass fibres are used the weight ratio of resin to glass in the skin or coating is between 2.5:1 and 3:1. This conforms to practices hitherto general in the art of glass reinforced plastics materials, g.r.p., where resin/glass ratios by weight are in excess of 2.5:1 and usually much higher.

According to one preferred feature of the invention described in specification No 1 555 271 the core is of expanded polyurethane foam. This is the preferred material for employment in the sandwich structure according to the present invention, other details of which will be described below.

A suitable and economic form of skin construction of glass fibre reinforced resin has been chopped strand mats of glass fibres which are reinforced with polyester or epoxy resin. In such mats individual glass fibres are pressed randomly together to form a mat. Typical mats have glass contents of 150 to 950 grams per square metre.

However, these glass fibres are randomly disposed and hence the spaces are also random. Significantly, we have determined that some resins and in particular most polyester resins, if cold cured, are liable to cold flowing when subjected to a strain as low as 0.08% in many cases.

When a given strain is exceeded some of the resin will cold flow and fibres will rnove relatively to each other, and this flow will continue so long as this particular load is sustained. With a good quality polyester, for example, if the load is reduced with corresponding reduction in strain a load level can be reached at which level, cold flow will cease or become minimal. This establishes the maximum load level for sustained static loads and is of a low order relative to the dynamic capacity of the material.

It has also been conventional to employ, in addition to or instead of chopped strand mat, a woven cloth-like sheet of glass fibres. In this the monofilaments are anything but straight. Instead the fibre rovings are sinuously woven together in a loose corrugated weave. This certainly facilitates the manipulation of the glass fibres during the laying up process, but the sinuous woven construction has lead to a disadvantage which has not received recognition hitherto. This is that when the resin has been applied, according to conventional teachings, adequately to wet the glass, the resultant structure has been found to experience permanent deformation under static loading of a surprisingly low order. We have found that this disadvantage is caused to a significant extent, by load being transferred into the resin which is secreted between the sinuous weaves of the glass fibres, as though filling in the undulations between corrugations. Then due to the propensity of the resin to cold-flow at relatively low strains, as discussed hereinbefore, the layer of woven fibres can be bent and can remain bent.

It has been generally accepted and recommended, heretofore, that the resin/fibre ratio should be at least 2.5:1 by weight and in some cases the resin content has been considerably increased in the mistaken belief that increased stiffness or safety could be obtained by adding more resin binder. Some increases in stiffness and resistance to permanent deformation can indeed be obtained by methods of curing the resin binder which involve heating. However, this is often inconvenient or uneconomic.

Accordingly, glass fibres in the forms of chopped strand mat with randomly arranged fibres, or glass fibres in woven cloth-like sheet form with the fibres extending sinuously have both proved not entirely satisfactory for forming structural skins for foam sandwich constructions. In particular they lack

**0 042 842**

the ability to sustain such proportion of the load as might reasonably be expected from an examination of a load/deflection curve for the particular structure.

On the other hand the use of pre-tensioned monofilaments as taught in French Specification No 2 060 386 is to be avoided since it involves additional apparatus such as tensioning rolls rendering this proposal unsuitable for use in one-off mould work. Indeed these panels will be most economically produced by prefabrication in large batch production.

The present invention has for its principal object to provide an economical light weight sandwich construction suitable for mould-works of the general kind defined in British Patent Specification No 1 555 271, and in which, greater stiffness and resistance to undesirable non-elastic deformation under static loads is achieved.

Accordingly this invention provides a foam sandwich structure suitable for use as a load bearing cladding with high stiffness to weight ratio and being of the type in which two skins are bonded, one on each side of a core of plastics foam material to form the sandwich with said core forming the main means of shear stress transference between the two skins, characterised in that each skin consists of a layer of monofilaments being at least 10 cm in length laid all in parallel with one another to extend along the skin, with directional change being kept minimal and, in particular, the filaments being non-sinuous and non-woven and wherein a mat of randomly arranged monofilaments is interposed between the foam core and each adjacent straight monofilament skin layer, said filaments being bound to one another and to adjacent layers of the sandwich structure by a thermosetting resin, the resin being present in a quantity sufficient to wet the filaments but not in excess, the ratio of resin to monofilament being always less than 1.75:1 by weight throughout the layer of straight filaments forming each skin, and the ratio of resin to filament material being less than 2:1 by weight throughout the sandwich structure as a whole.

Preferably the mat of randomly arranged glass monofilaments is laid between the foam core and a layer of substantially straight glass monofilaments, the mat having a weight of more than 20 but less than 500 grams per square metre and wherein the layer of substantially straight monofilaments is of a weight of at least 500 grams per square metre.

The resin content of a skin in a sandwich structure according to the present invention is much lower than had previously been thought necessary and the monofilaments which are advantageously laid as near as convenient to the outside of the skin, form the main structural element in the resin monofilament composite.

The resin is one of phenolic resin, polyester resin, polyurethane resin or epoxy resin and the monofilaments are of glass, carbon, nylon, aromatic polyamide, acrylic resin, metal or any combination of these. For example metal wire or strip could be employed.

The core is a foam material having a density of between 75 kg/m$^3$ and 750 kg/m$^3$, a shear modulus of at least 3,400 kN/m$^2$ when measured at a strain of 10%, and a shear strength of not less than 620 kN/m$^2$. The core may be a foam of polyvinylchloride or preferably it is an expanded polyurethane foam.

The monofilaments are kept as straight as possible and are located close to the outside of the skin. Where the skin curves of necessity, the curvature of the monofilaments is kept as low as possible. The monofilaments are as long as possible. They may be up to say 20 m or more and are never less than say 10 cm in length. For maximum efficiency the monofilaments must extend over the full span of the beam between strong points supporting the beam. Where a beam continues over a number of strong points or supports and it is not convenient to span all the supports with the preferred single continuous length of monofilament, sets of the straight monofilaments should be overlapped at the location of a support.

Preferably to enable manipulation during construction, for example laying up in or on a mould, the monofilaments may be bound by light thread, so that there are formed bundles of parallel monofilaments which are still neither crimped nor woven but are still kept as straight as possible so that they can be laid to lie parallel with the surface of the resin monofilament composite skin.

Such a straight monofilament arrangement may be formed, on one side of a light mat of randomly arranged short monofilaments, and the aforementioned chopped strand mat can be preattached to the monofilaments. Where the monofilament layer is faced on one side with chopped strands the latter would be placed next to the foam if other layers were not included in the skin, the final requirement being that the roughness of the monofilaments be smoothed out on both sides.

In the case of a composite consisting of a layer of straight glass monofilaments disposed alongside an adjacent layer of randomly arranged glass filaments, there may be 500 to 2000 grams of glass per square metre in the straight monofilament layer, and more than 20 but less than 500 grams per square metre of glass in the mat layer.

It will be obvious from the foregoing that the long monofilaments are intended to take the major tensile and compressive stresses in the final sandwich structure. However, this construction allows for a substantially reduced resin to monofilament ratio and there being less resin between the layers of monofilaments, the shear stiffness will be correspondingly higher and permanent deformation due to movement in shear, will be less.

One further aspect of the invention, broadly stated comprises a structural skin which has bundles

3

of parallel glass monofilaments, the individual monofilaments being substantially straight and being neither woven nor crimped and having a length of at least 10 cm and the bundles extending along the skin and over the span to which load is to be applied, the bundles of parallel straight monofilaments being wholly embedded in a thermosetting resin, and bonded, with an intervening layer of randomly disposed glass monofilaments onto a foam core layer.

Such skins are usually arranged to bridge spans between strong points, that is to say, supporting structural members analogous to joists. These joists may be as little as 10 cm apart or as much as 1 metre or more apart. Preferably the individual monofilaments extend over the whole of the span between these joists and are straight or have a low degree of curvature.

Other bundles of straight monofilaments may be arranged to extend transversely of the first longitudinally arranged bundles. These transverse monofilaments will also be non-sinuous and embedded in the resin.

It will be appreciated that the invention provides a structure in which the resin, instead of being reinforced by randomly arranged fibres, or fibres which are initially sinuous and interwoven as in woven rovings, is reinforced by straight monofilaments bridging the span where the skin extends between strong points.

By way of example two beams were compared. Both had the same overall length and same width the thickness varying slightly because of the differences in construction. The weights were almost identical as shown below. In both cases an identical polyurethane foam core of 12.7 mm was used.

Beam 1
a) 2 layers of randomly arranged glass monofilaments each layer having a glass content of 450 g/m².
b) 1 core layer of polyurethane foam; thickness—12.7 mm.
a) 2 layers of randomly arranged glass monofilaments each layer having a glass content of 450 g/m².

Beam 2
$a_1$) 1 layer of randomly arranged glass monofilaments with a glass content of 150 g/m².
c) 1 layer of generally straight monofilaments with a glass content of 800 g/m².
$a_2$) 1 layer of randomly arranged glass monofilaments with a glass content of 300 g/m².
b) 1 core layer of polyurethane foam; thickness—12.7 mm.
$a_2$) 1 layer of randomly arranged glass monofilaments with a glass content of 300 g/m².
c) 1 layer of generally straight monofilaments with a glass content of 800 g/m².
$a_1$) 1 layer of randomly arranged glass monofilaments with a glass content of 150 g/m².

| Comparisons | Beam 1 | Beam 2 |
|---|---|---|
| Resin: Glass ratio—by weight | 2:1 | 1.6:1 |
| Weight-kg/sq metre | 7.08 | 7.01 |
| Spring rate in N/mm on 254 mm span (beam width 25.4 mm) | 72.89 | 168.81 |
| Max. central load with load still proportional to deflection under dynamic conditions. (254 mm span, beam width 25.4 mm) | 30.63 | 50.99 |
| Max. permissable static central load 254 mm span, 25.4 mm wide Kg | 2.96 | 13.71 |

Note 1
Beam 1 is constructed as described in UK Specification No 1 555 271 except that instead of the resin to glass ratio, by weight, of between 2.5:1 and 3:1 recommended in that specification (page 2 line 89), Beam 1 was given a lower resin content so that the resin to glass ratio, by weight, was only 2:1. If more resin had been employed, the beam would have had even less ability to sustain static loadings.

Note 2
The layers c) in Beam 2, had a glass content of 800 g/m² and of this 400 g ran in one direction along the beam tested while the remaining 400 g ran across the beam and hence took hardly any structural part in supporting the load during the particular test.
To illustrate that these improved results were not due merely to the increase in the ratio of glass to resin a further beam was constructed as follows and with a resin to glass ratio of about 1.6:1 by weight.

Beam 3
$a_3$) 1 layer of randomly arranged glass monofilaments with a glass content of 450 g/m².
d) 1 layer of glass filaments each more than 10 cm in length but which were sinuously woven together to form a cloth-glass content 542 g/m².
$a^3$) 1 layer or randomly arranged glass monofilaments with a glass content of 450 g/m².
b1) 1 foam core layer with a thickness of 19.25 mm.

a³) 1 layer of randomly arranged glass monofilaments with a glass content of 450 g/m².
d) 1 layer of glass filaments each more than 10 cm in length but which were sinuously woven together to form a cloth-glass content 542 g/m².
a₃) 1 layer of randomly arranged glass monofilaments with a glass content of 450 g/m².

| | |
|---|---|
| Weight—kg/sq metre | 10.92 |
| Spring rate in N/mm on 254 span (beam width 25.4 mm) | 111.89 |
| Max. central load with load still proportional to deflection under dynamic conditions (254 mm span, beam width 25.4 mm) Kg | 21.71 |
| Max. permissable static central load 254 mm span, 25.4 mm wide Kg | 7.51 |

It is of interest to compare the three Beams in terms of stiffness per unit weight and permissable static load per unit weight, Beam 2 being constructed in accordance with the invention.

| | Beam | | |
|---|---|---|---|
| | 1 | 2 | 3 |
| Stiffness/unit weight | 9.02 | 24.08 | 11.09 |
| Permissable static load/unit weight | 0.37 | 1.96 | 0.74 |

Even if in Beam 3 the resin content and the overall weight had been increased, there would be a reduction in the ability to support static load. If its foam core had been reduced in thickness to 12.7 mm, as with the cores of Beams 1 and 2 its resistance to static load would have been lower.

## Claims

1. A foam sandwich structure suitable for use as a load bearing cladding with high stiffness to weight ratio and being of the type in which two skins are bonded, one on each side of a core of plastics foam material to form the sandwich with said core forming the main means of shear stress transference between the two skins, characterised in that

each skin consists of a layer of monofilaments being at least 10 cm in length laid all in parallel with one another to extend along the skin, with directional change being kept minimal and, in particular, the filaments being non-sinuous and non-woven

and wherein a mat of randomly arranged monofilaments is interposed between the foam core and each adjacent straight monofilament skin layer,

said filaments being bound to one another and to adjacent layers of the sandwich structure by a thermosetting resin, the resin being present in a quantity sufficient to wet the filaments but not in excess,

the ratio of resin to monofilament being always less than 1.75:1 by weight throughout the layer of straight filaments forming each skin, and

the ratio of resin to filamental material being less than 2:1 by weight throughout the sandwich structure as a whole.

2. A sandwich structure according to claim 1 wherein a mat of randomly arranged glass monofilaments is laid between the foam core and a layer of substantially straight glass monofilaments, the mat having a weight of more than 20 but less than 500 grams per square metre and wherein the layer of substantially straight monofilaments is of a weight of at least 500 grams per square metre.

3. A sandwich structure according to claim 2, wherein the resin binder and monofilaments are present in the layers at each side of said foam core in a resin to monofilament ratio of less than 1.75:1 weight.

4. A sandwich structure according to claim 1 wherein the resin is one of phenolic resin, polyester resin, polyurethane resin or epoxy resin and wherein the monofilaments are of glass, carbon, nylon, acrylic resin, aromatic polyamide or metal or any combination of these.

5. A sandwich structure according to any preceding claim wherein a group of monofilaments are laid parallel to one another and formed into a bundle by being bound with light thread to facilitate manipulation of the monofilaments as and before the resin is applied prior to curing of the latter.

6. A sandwich structure according to claim 1 wherein, to facilitate manipulation as and before the resin is applied and cured, groups of straight monofilaments are laid parallel to one another and prefixed to form a layer on one side of a mat of randomly disposed monofilaments which are shorter than said straight monofilaments.

7. A sandwich structure according to claim 6 wherein each layer of parallel laid monofilaments fixed to one side of the mat is crossed over by another layer of parallel laid monofilaments, all said parallel laid monofilaments being substantially straight being neither crimped nor woven.

8. A sandwich structure according to claim 1 wherein the core of foam has a density of at least 75 kg/m³.

9. A sandwich structure according to claim 8 wherein the construction includes on the outside of at least one of the structural skins, a layer of resin which may contain a filler material.

10. A sandwich structure according to claim 1 and comprising fixed on each side of a core of expanded polyurethane foam having a density of at least 75 Kg/m³, a first layer next to the foam core consisting of randomly arranged monofilaments; and outside this, a second layer of monofilaments these extending along the skin and being non-sinuous and non-woven, all the filaments in this layer being parallel to one another and including laid outside the second layer, a third layer of monofilaments which are laid parallel to one another but at an angle inclined to the parallel filaments in the adjacent underlying layer.

11. A sandwich structure according to claim 10 wherein glass is present

a) in said first layer of randomly arranged monofilaments, in an amount of 250 to 350 grams per square metre;
b) in said second and third layers of generally straight monofilaments, in an amount of 500 to 1500 grams per square metre; and
c) in a fourth and outer layer of randomly arranged filaments in an amount of 100 to 200 grams per square metre.

12. A sandwich structure according to claim 10 wherein, the resin employed to bond the filaments to one another and to adjacent layers, is polyester resin and including a decorative surface coating applied to the outside of the sandwich construction.

13. A sandwich structure according to claim 1 wherein, in the case where the structure, as a cladding, bridges a span between strong points, the non-sinuous monofilaments in the skin bonded at each respective side of the foam core, are laid in parallel to bridge the span, the individual monofilaments being continuous and unbroken over the entire span bridged by the sandwich structure.

**Patentansprüche**

1. Schaum-Sandwichstruktur, welche als lastaufnehmende Verkleidung mit hohem Verhältnis von Steifheit zu Gewicht geeignet ist und dem Typ angehört, bei dem zwei Außenhäute, jeweils eine auf einer Seite, mit einem Kern aus einem Kunststoffschaummaterial unter Bildung des Sandwichs verbunden sind, wobei der Kern die Haupt-Scherbelastungsübertragungseinrichtung zwischen den beiden Außenhäuten darstellt, dadurch gekennzeichnet, daß jede Außenhaut aus einer Schicht von Monofilamenten mit einer Länge von mindestens 10 cm besteht, welche sich parallel zueinander längs der Außenhaut erstrecken, wobei die Richtungsänderungen minimal sind und insbesondere die Monofilamente nicht sinusförmig und nicht verwoben sind, und daß eine Matte aus statistisch angeordneten Monofilamenten zwischen dem Schaumkern und jeder daran angrenzenden Außenhautschicht aus dem geraden Monofilament angeordnet ist, welche Monofilamente mit einem hitzehärtenden Harz miteinander und mit benachbarten Schichten der Sandwichstruktur verbunden sind, und wobei das Harz in einer Menge vorhanden ist, die dazu ausreicht, die Filamente zu benetzen, jedoch nicht im Überschuß, das Gewichtsverhältnis von Harz zu Monofilament in der gesamten jeweils die Außenhaut bildenden Schicht mit geraden Filamenten stets geringer ist als 1,75:1, und das Gewichtsverhältnis von Harz zu Filamentmaterial in der gesamten Sandwichstruktur weniger als 2:1 beträgt.

2. Sandwichstruktur nach Anspruch 1, dadurch gekennzeichnet, daß zwischen dem Schaumkern und einer Schicht aus im wesentlichen geraden Glas-Monofilamenten eine Matte aus statistisch angeordenten Glas-Monofilamenten angeordnet ist, welche Matte ein Gewicht von mehr als 20 jedoch weniger als 500 Gramm pro Quadratmeter aufweist und wobei die Schicht aus im wesentlichen geraden Monofilamenten ein Gewicht von mindestens 500 Gramm pro Quadratmeter besitzt.

3. Sandwichstruktur nach Anspruch 2, dadurch gekennzeichnet, daß das Harzbindemittel und die Monofilamente in den Schichten auf beiden Seiten des Schaumkerns in einem Gewichtsverhältnis von Harz zu Monofilament von weniger als 1,75:1 vorhanden sind.

4. Sandwichstruktur nach Anspruch 1, dadurch gekennzeichnet, daß das Harz ein Phenolharz, ein Polyesterharz, ein Polyurethanharz oder ein Epoxidharz ist und die Monofilamente aus Glas, Kohlenstoff, Nylon, einem Acrylharz, einem aromatischen Polyamid oder einem Metall oder irgendeiner Kombination davon bestehen.

5. Sandwichstruktur nach einem der vorhergehenden Ansprüche, dadurch gekennzeichnet, daß eine Gruppe von Monofilamenten parallel zueinander ausgerichtet wird und durch Verbinden mit einem leichten Faden zu einem Bündel geformt wird, um die Handhabung der Monofilamente als solche und vor dem Aufbringen des Harzes vor seiner Aushärtung zu erleichtern.

6. Sandwichstruktur nach Anspruch 1, dadurch gekennzeichnet, daß Gruppen von Monofilamenten zur Erleichterung ihrer Handhabung als solchen und vor dem Aufbringen und Härten des Harzes parallel zueinander ausgelegt und vorfixiert werden unter Bildung einer Schicht auf einer Seite einer Matte aus statistisch angeordneten Monofilamente, die kürzer sind als die geraden Monofilamente.

7. Sandwichstruktur nach Anspruch 6, dadurch gekennzeichnet, daß jede Schicht von parallel ausgelegten Monofilamenten, die an einer Seite der Matte fixiert ist, mit einer anderen Schicht aus parallel ausgelegten Monofilamenten überkreuzt wird, wobei sämtliche parallel ausgelegten Monofilamente im wesentlichen gerade sind und weder gekräuselt noch verwoben sind.

8. Sandwichstruktur nach Anspruch 1, dadurch gekennzeichnet, daß der Schaumkern eine Dichte von mindestens 75 kg/m³ besitzt.

9. Sandwichstruktur nach Anspruch 8, dadurch gekennzeichnet, daß die Konstruktion auf der Außensiete mindestens einer der Außenhäute eine Schicht aus einem Harz aufweist, welches ein Füllstoffmaterial enthalten kann.

10 Sandwichstruktur nach Anspruch 1, bei der mit jeder Seite eines Kerns aus aufgeschäumtem Polyurethanschaum mit einer Dichte von mindestens 75 kg/m³ eine dem Schaumkern benachbarte erste Schicht aus statistisch angeordneten Monofilamenten und außerhalb davon eine zweite Schicht aus Monofilamenten, die sich längs der Außenhaut erstrecken und nicht sinusförmig und nicht verwoben sind, wobei sämtliche Filamente in dieser Schicht parallel zueinander verlaufen, und außerhalb der zweiten Schicht eine dritte Schicht aus Monofilamenten, die parallel zueinander, jedoch in einem Winkel zu den parallelen Filamenten in der benachbarten darunter liegenden Schicht ausgelegt sind, verbunden sind.

11. Sandwichstruktur nach Anspruch 10, dadurch gekennzeichnet, daß Glas

a) in der ersten Schicht aus statistisch angeordneten Monofilamenten in einer Menge von 250 bis 350 Gramm pro Quadratmeter,

b) in der zweiten und dritten Schicht aus im allgemeinen geraden Monofilamenten in einer Menge von 500 bis 1500 Gramm pro Quadratmeter und

c) in einer vierten und äußeren Schicht von statistisch angeordneten Filamenten in einer Menge von 100 bis 200 Gramm pro Quadratmeter vorhanden ist.

12. Sandwichstruktur nach Anspruch 10, dadurch gekennzeichnet, daß das zur Verbindung der Filamente miteinander und mit benachbarten Schichten verwendete Harz ein Polyesterharz ist und daß auf der Außenseite der Sandwichstruktur eine dekorative Oberflächendeckschicht aufgetragen ist.

13. Sandwichstruktur nach Anspruch 1, dadurch gekennzeichnet, daß für den Fall, daß die als Verkleidung eingesetzte Struktur einen Abstand zwischen festen Punkten überbrückt, die nicht sinusförmigen Monofilamente der Außenhaut, die mit der jeweils betreffenden Seite des Schaumkerns verbunden sind, parallel zu der Überbrückung des Abstandes ausgelegt sind, wobei die einzelnen Monofilamente über den gesamten von der Sandwichstruktur überbrückten Abstand endlos und nicht unterbrochen sind.

**Revendications**

1. Structure mousse stratifiée qui convient pour être utilisée comme parament supportant une charge, avec un rapport élevé de la rigidité au poids, et qui est du type dans lequel deux peaux sont liées, l'une de chaque côté d'une âme en matière plastique mousse, pour former le stratifié, ladite âme formant les moyens principaux de transfert des contraintes de cisaillement centre les deux peaux, caractérisée en ce que chaque peau consiste en une couche de monofilaments d'une longueur d'au moins 10 cm placés tous parallèlement les uns aux autres de manière à s'étendre le long de la peau, les changements de direction étant maintenus à un minimum et, en particulier, les filaments étant non sinueux et non tissés et dans laquelle un mat de monofilaments disposés au hasard est interposé entre l'âme en mousse et chaque couche de peaux adjacente en monofilaments rectilignes, ces filaments étant liés les uns aux autres et aux couches adjacentes de la structure stratifiée par un résine thermodurcissable, la résine étant présente en une quantité suffisante pour mouiller les filaments, mais n'étant pas en excès, le rapport de la résine au monofilament étant toujours inférieur à 1,75:1 en poids dans toute la couche de filaments rectilignes formant chaque peau, et le rapport de la résine à la matière filamentaire étant inférieur à 2:1 en poids dans toute la structure stratifiée considérée dans son ensemble.

2. Structure stratifiée suivant la revendication 1, dans laquelle un mat de monofilaments de verre disposés au hasard est interposé entre l'âme en mousse et une couche de monofilaments de verre sensiblement rectilignes, le mat ayant un poids supérieur à 20, mais inférieure à 500 grammes par m² et la couche de monofilaments sensiblement rectilignes ayant un poids d'au moins 500 grammes par m².

3. Structure startifiée suivant la revendication 2, dans laquelle le liant résineux et les monofilaments sont présents dans les couches de chaque côté de l'âme en mousse en un rapport de la résine aux monofilaments inférieur à 1,75:1 en poids.

4. Structure stratifiée suivant la revendication 1, dans laquelle la résine est une résine phénolique, une résine de polyester, une résine de polyuréthanne ou une résine époxy et dans laquelle les monofilaments sont en verre, en carbone, en Nylon, en résine acrylique, en polyamide aromatique ou en métal, ou en n'importe quelle combinaison de ceux-ci.

5. Structure stratifiée suivant l'une quelconque des revendications précédentes, dans laquelle un groupe de monofilaments sont disposés parallèlement les uns aux autres et conformés en un fasceau, en étant liés par du fil léger pour faciliter la manipulation des monofilaments, avant et pendant l'application de la résine avant le durcissement de celle-ci.

6. Structure stratifiée suivant la revendication 1, dans laquelle, pour faciliter la manipulation quand la résine est appliquée et durcie et avant qu'elle soit appliquée et durcie, des groupes de monofilaments rectilignes sont disposés parallèlement les uns aux autres et préfixés pour forme une couche d'un côté d'un mat de monofilaments disposés au hasard qui sont plus courts que lesdites monofilaments rectilignes.

7. Structure stratifiée suivant la revendication 6, dans laquelle chaque couche de monofilaments, disposés parallèlement et fixes d'un côte du mat, est croisée par une autre couche de monofilaments disposés parallèlement, tous lesdits monofilaments disposés parallèlement étant sensiblement rectilignes et n'étant ni texturés, ni tissés.

8. Structure stratifiée suivant la revendication 1, caractérisée en ce que l'âme en mousse a une masse volumique d'au moins 75 kg/m$^3$.

9. Structure stratifiée suivant la revendication 8, caractérisée en ce que l'agencement comprend, sur la face extérieure d'au moins l'une des peaux de structure, une couche de résine qui peut contenir une matière de charge.

10. Structure stratifiée suivant la revendication 1 et comprenant, fixée de chaque côté d'une âme en mousse de polyuréthanne expansée ayant une masse volumique d'au moins 75 kg/m$^3$, une première couche proche de l'âme en mousse et consistant en monofilaments disposés au hasard; et, en dehors de celle-ci, une seconde couche de monofilaments, ceux-ci s'étendant le long de la peau et étant non sinueux et non tissés, tous les filaments de cette couche étant parallèles les uns aux autres et la structure comprend, à l'extérieure de la seconde couche, une troisième couche de monofilaments qui sont disposés parallèlement les uns aux autres, mais qui sont inclinés suivant un angle, par rapport aux filaments parallèles de la couche adjacent sous-jacente.

11. Structure stratifiée suivant la revendication 10, dans laquelle du verre est présent

a) dans ladite première couche de monofilaments disposés au hasard, en une quantité de 250 à 350 grammes par m$^2$;
b) dans lesdites second et troisième couches de monofilaments rectilignes d'une manière générale, en une quantité de 500 à 1500 grammes par m$^2$; et
c) dans une couche quatrième et extérieure de filaments disposés au hasard, en une quantité de 100 à 200 grammes par m$^2$.

12. Structure stratifiée suivant la revendication 10, dans laquelle la résine utilisée pour lier les filaments les uns aux autres et aux couches adjacentes est une résine de polyester, et la structure comprend un revêtement décoratif de surface appliqué à la partie extérieure de l'agencement stratifié.

13. Structure stratifiée suivant la revendication 1, dans laquelle, dans le cas où la structure, à titre de parement, comble une portée entre des appuis, les monofilaments non sinueux de la peau liés de chaque côté respectif de l'âme en mousse, sont disposés parallèlement pour combler la portée les monofilaments individuels étant continus et n'étant pas cassés sur tout l'intervalle comblé par la structure stratifiée.